# EUROPEAN PATENT APPLICATION

(11) **EP 4 814 438 A1**
(43) Date of publication of application: **30.09.2026**
(21) Application number: 26165686.2
(22) Date of filing: 18.03.2026
(51) Int. Cl.: G01B 15/02, G01B 5/00, G01N 23/16

(54) **MEASUREMENT APPARATUS**

(30) Priority: 26.03.2025 JP 2025051933
(71) Applicant: Yokogawa Electric Corporation, Musashino-shi, Tokyo 180-8750 (JP)
(72) Inventor: HIRONO, Mamoru, Musashino-shi, Tokyo, 180-8750 (JP)
(74) Representative: Winter, Brandl - Partnerschaft mbB

(57) **Abstract**

A measurement apparatus that measures a parameter of a sheet-like subject, the measurement apparatus includes a pair of sensor heads; a support; an electric unit (30) that is mounted on the support and is changeable in position to either a first position or a second position; an opposed unit (35) that is mounted in the second position when the electric unit is mounted in the first position and that is mounted in the first position when the electric unit is mounted in the second position; a first operation unit that is mounted on the opposed unit (35) and that stops supplying power to the sensor heads; and a second operation unit (37) that is mounted on the opposed unit (35) and that switches between supplying power to the sensor heads and stopping the supply according to an operation on an insertable key (38).

## Description

### CROSS-REFERENCE TO RELATED APPLICATION

The present application claims priority to and incorporates by reference the entire contents of Japanese Patent Application No. 2025-051933 filed in Japan on March 26, 2025.

### FIELD

The present disclosure relates to a measurement apparatus.

### BACKGROUND

A technique relating to a measurement apparatus that measures a basis weight of a sheet-like subject has been known. For example, Japanese Laid-open Patent Publication No. 2018-124104 discloses a measurement apparatus whose sensor heads are supported by a support (O-shape frame) such that the sensor heads are movable horizontally. The measurement apparatus is, for example, an online thickness gauge.

The measurement apparatus is provided with an electric unit that controls measurement of the subject. The electric unit is mounted on the support. In the conventional measurement apparatus, it is difficult to change a position in which the electric unit is mounted after the measurement apparatus is manufactured and thus it is difficult to meet a request to change the position in which the electric unit is mounted according to a place where the measurement apparatus is installed and environments surrounding the place.

An object of the disclosure is to obtain a measurement apparatus in which a position in which an electric unit is mounted is changeable.

### SUMMARY

A measurement apparatus that measures a parameter of a sheet-like subject, the measurement apparatus includes a pair of sensor heads that are separated from each other, that travel horizontally while being opposed to each other, and that scan a subject being positioned between the sensor heads; a support that supports the pair of sensor heads such that the sensor heads are movable in a horizontal direction; an electric unit that is mounted on the support such that arrangement of the electric unit is changeable to any one of a first position on one side along a travel direction in which the sensor heads travel and a second position on the other side along the travel direction and that controls measurement of the parameter using the sensor heads; an opposed unit that is mounted in the second position when the electric unit is mounted in the first position and that is mounted in the first position when the electric unit is mounted in the second position; a first operation unit that is mounted on the opposed unit and that stops supplying power to the sensor heads; and a second operation unit that is mounted on the opposed unit and that switches between supplying power to the sensor heads and stopping the supply according to an operation on an insertable key.

### BRIEF DESCRIPTION OF THE DRAWINGS

FIG. 1 is a schematic diagram illustrating a schematic configuration of a measurement apparatus according to a first embodiment of the disclosure and illustrates a position in which an electric unit is mounted;
FIG. 2 is a schematic diagram illustrating the schematic configuration of the measurement apparatus according to the first embodiment of the disclosure and illustrates a position in which an opposed unit is mounted;
FIG. 3 is a schematic diagram of the measurement apparatus according to the first embodiment of the disclosure, viewed in a direction in which a subject is conveyed, and illustrates the state where the electric unit is arranged in a first position;
FIG. 4 is a schematic diagram of the measurement apparatus according to the first embodiment of the disclosure, viewed in the direction in which the subject is conveyed, and illustrates the state where the electric unit is arranged in a second position;
FIG. 5 is a diagram of the opposed unit on which a first operation unit and a second operation unit are mounted, viewed along a depth direction;
FIG. 6 is a diagram of the opposed unit on which the first operation unit and the second operation unit are mounted, viewed from an upper side;
FIG. 7 is a diagram of the opposed unit on which the first operation unit and the second operation unit are mounted in a first position, viewed along the depth direction;
FIG. 8 is a diagram of the opposed unit illustrated in FIG. 7, viewed from the upper side;
FIG. 9 is a perspective view of a part of the opposed unit mounted in a second position, viewed from an inner side of a casing; and
FIG. 10 is a diagram of the opposed unit viewed from a side of a second surface.

### DESCRIPTION OF EMBODIMENTS

A measurement apparatus according to an embodiment of the disclosure will be described in detail below with reference to the accompanying drawings. Note that the embodiment described below does not limit the present disclosure.

### First Embodiment

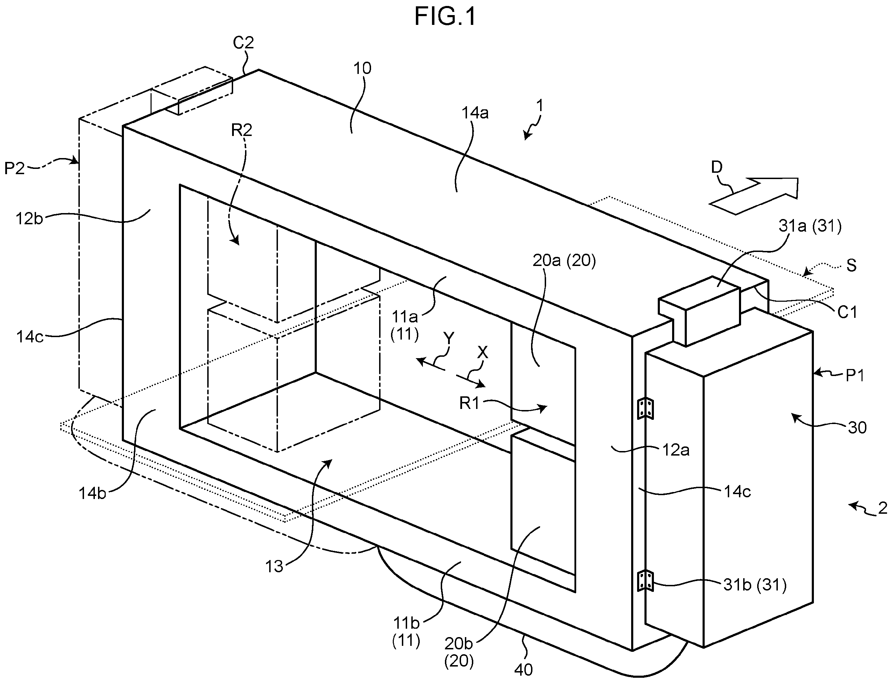

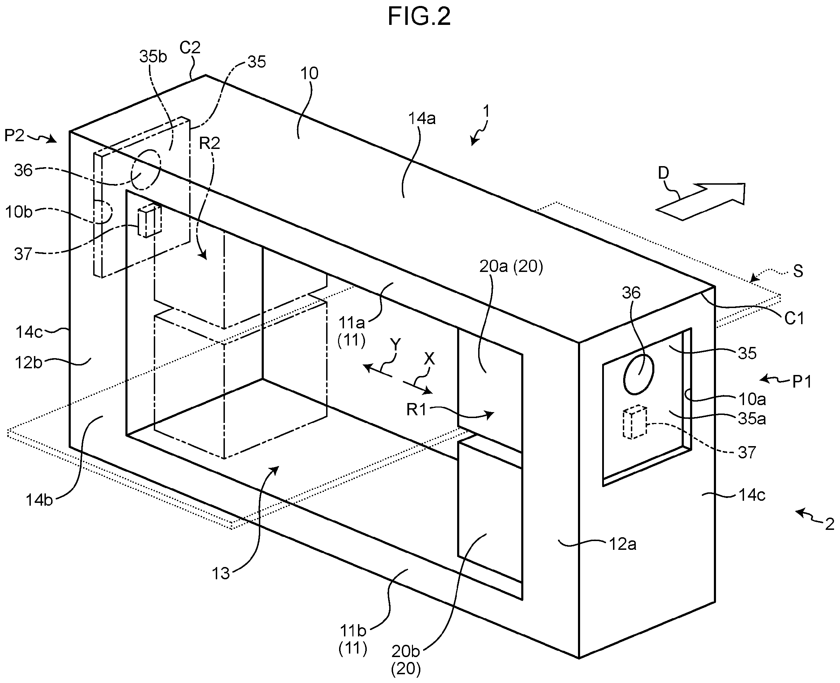

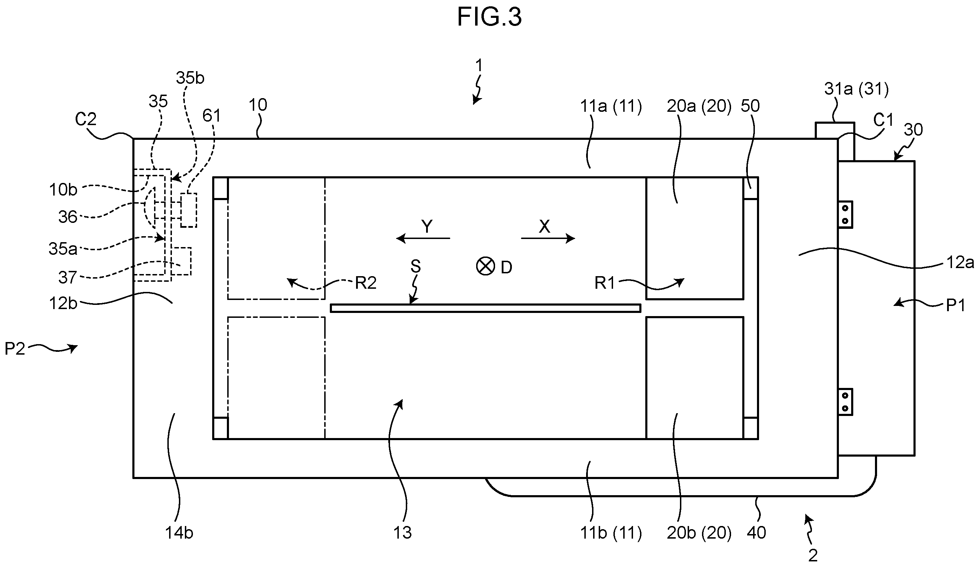

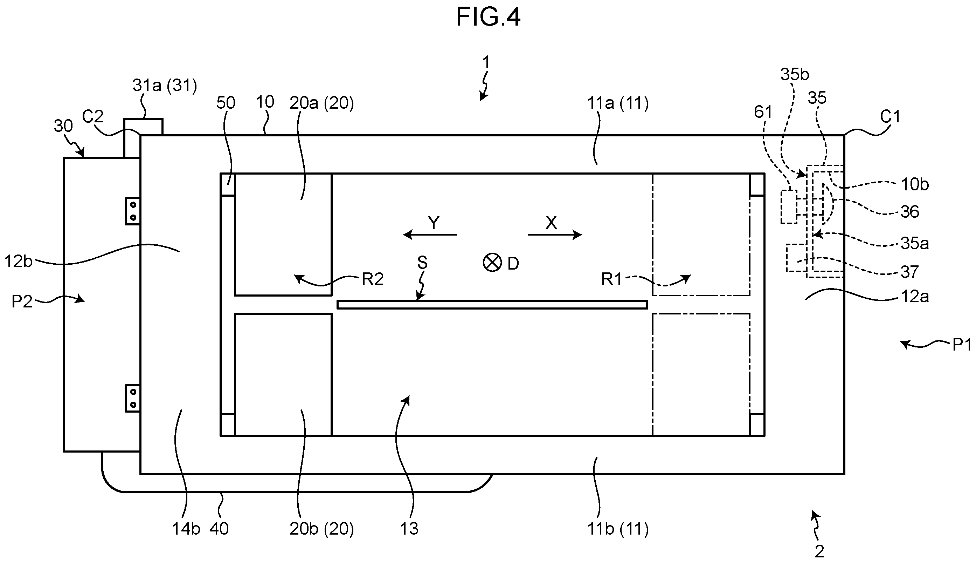

FIG. 1 is a schematic diagram illustrating a schematic configuration of a measurement apparatus according to a first embodiment of the disclosure and illustrates a position in which an electric unit is mounted. FIG. 2 is a schematic diagram illustrating the schematic configuration of the measurement apparatus according to the first embodiment of the disclosure and illustrates a position in which an opposed unit is mounted. FIG. 3 is a schematic diagram of the measurement apparatus according to the first embodiment of the disclosure, viewed in a direction in which a subject is conveyed, and illustrates the state where the electric unit is arranged in a first position. FIG. 4 is a schematic diagram of the measurement apparatus according to the first embodiment of the disclosure, viewed in the direction in which the subject is conveyed, and illustrates the state where the electric unit is arranged in a second position.

In FIGS. 1 to 4, a diminishing scale of each member is changed appropriately to make each member be in a size such that each member is recognizable. In FIGS. 1 to 4, one side of a measurement apparatus 1 is set for a first position P1 and the other side of the measurement apparatus 1 is set for a second position P2. Note that "one side" refers to one side along a direction in which sensor heads 20 to be described below travel and is a side represented by an arrow X in FIGS. 1 and 2. "The other side" refers to the other side along a direction in which the sensor heads 20 to be described below travel and is a side represented by an arrow Y in FIGS. 1 and 2. "The direction in which the sensor head 20 travels" is also referred to simply as "travel direction" and "the direction in which the subject is conveyed" is also referred to simply as "conveying direction". The conveyance direction is represented by an arrow D in FIGS. 1 to 4.

The measurement apparatus 1 measures a parameter of a sheet-like subject S. In the disclosure, the "measurement apparatus 1" includes, for example, an online thickness gauge. "The subject S" includes, for example, a battery electrode sheet. "The parameter" includes, for example, a basis weight, a weight, a thickness, and a surface position.

The measurement apparatus 1, for example, is incorporated in a production line for producing the sheet-like subject S and measures a parameter of the subject S that is manufactured sequentially and that is conveyed along a direction of conveyance without stopping the conveyance of the subject S. The measurement apparatus 1 includes a support 10, a pair of sensor heads 20, an electric unit 30, an opposed unit 35, a first operation unit 36, a second operation unit 37, a cable 40, and a pair of switches 50. Although not illustrated in the drawings, the measurement apparatus 1 also includes an operation panel for an operating person to input an instruction.

FIG. 1 illustrates the state where the pair of sensor heads 20, the electric unit 30, and the cable 40 are mounted on the side of the first position P1 in solid lines. On the other hand, FIG. 1 illustrates that the pair of sensor heads 20, the electric unit 30, and the cable 40 are positioned on the side of a second position P2 instead of the side of the first position P1 by dash-dot-dot lines. Illustration of the opposed unit 35, the first operation unit 36, and the second operation unit 37 is omitted from FIG. 1.

FIG. 2 illustrates that the opposed unit 35 and the first operation unit 36 are positioned on the side of the first position P1 by solid lines and illustrates that the second operation unit 37 is positioned on the side of the second position P2 by dash-dot-dot lines. On the other hand, FIG. 2 illustrates that the opposed unit 35, the first operation unit 36, and the second operation unit 37 are positioned on the side of the second position P2 instead of the side of the first position P1 by dash-dot-dot lines. Illustration of the electric unit 30 and the cable 40 is omitted from FIG. 2.

As illustrated in FIG. 3, when the electric unit 30 is provided on the side of the first position P1, the opposed unit 35, the first operation unit 36, and the second operation unit 37 are provided on the side of the second position P2. As illustrated in FIG. 4, when the electric unit 30 is provided on the side of the second position P2, the opposed unit 35, the first operation unit 36, and the second operation unit 37 are provided on the side of the first position P1.

The support 10 is structured such that a direction orthogonal to a conveyance direction D in which the subject S is conveyed is a longitudinal direction. The support 10 is formed symmetrically with respect to the subject S. More specifically, the support 10 is formed such that the support 10 is vertically symmetrical or horizontally symmetrical with respect to the subject S positioned at a center part of the support 10.

The pair of sensor heads 20 are supported on the support 10 such that the sensor heads 20 are movable in a horizontal direction. More specifically, the support 10 supports the pair of sensor heads 20 such that the sensor heads 20 are movable horizontally along the longitudinal direction of the support 10. Note that, in the following description, the travel direction and the direction perpendicular to the vertical direction is a depth direction. One side along the depth direction is a front side and the other side is a back side. In the measurement apparatus 1, an upstream side along the conveyance direction D is the front side and the downstream side is the back side. In FIG. 2, the front side on the drawing is the front side and the back side on the drawing is the back side. The support 10 includes a pair of beams 11 that support the pair of sensor heads 20, respectively. The support 10 includes a first stand 12a that connects ends of the pair of beams 11 on the one side. The support 10 includes a second stand 12b that connects ends of the pair of beams 11 on the other side.

The first stand 12a and the second stand 12b are support structures each of which can stand independently and support the beams 11. The first stand 12a is connected to ends of the pair of beams 11 that are arranged in parallel on one side. The second stand 12b is arranged separately from the first stand 12a in a horizontal direction and is connected to ends of the pair of beams 11 on the other side. The pair of beams 11 are arranged in parallel separately vertically. The pair of beams 11 include an upper beam 11a arranged on an upper side and a lower beam 11b arranged on a lower side.

The support 10 is an O-shape frame in an O-shape with an opening 13 surrounded by the upper beam 11a, the lower beam 11b, the first stand 12a, and the second stand 12b. The first position P1 is a position on one side of the O-shape frame in a longitudinal direction. The second position P2 is a position on the other side of the O-shaped frame in the longitudinal direction. A sheet-like subject S on which a parameter is to be measured passes through the opening 13 and is conveyed sequentially in one direction from the front side of the support 10 toward the back side.

The support 10 has an upper surface 14a of the O-shape frame, a first side surface 14b orthogonal to a direction D in which the subject S is conveyed, and a second side surface 14c orthogonal to the longitudinal direction of the support 10. The support 10 has a first corner C1 at which the second side surface 14c positioned on the one side of the support 10, that is, on the right side and the upper surface 14a intersect. The support 10 has a second corner C2 at which the second side surface 14c positioned on the other side of the support 10, that is, on the left side and the upper surface 14a intersect.

The support 10 has a first evacuation area R1 and a second evacuation area R2 where the subject S is not present respectively on the side of the first position P1 of the support 10 and the side of the second position P2 of the support 10. The first evacuation area R1 is positioned on one side of the support 10 in the longitudinal direction with respect to the subject S in an internal space of the O-shape frame surrounded by the upper beam 11a, the lower beam 11b, the first stand 12a, and the second stand 12b. The second evacuation area R2 is positioned on the other side of the support 10 in the longitudinal direction with respect to the subject S in the internal space. In the first evacuation area R1 and the second evacuation area R2, the subject S does not overlap the pair of sensor heads 20 in the vertical direction.

The pair of sensor heads 20 are separated from each other, travel horizontally while being opposed to each other, and scan the subject S being positioned between the sensor heads 20. More specifically, the two sensor heads 20 are provided such that the sensor heads 20 are separated in the vertical direction with a space of an area in between that the subject S passes. Each of the pair of sensor heads 20 is fixed to a travel mechanism not illustrated in the drawings and is supported such that the head are movable horizontally with respect to the beams 11 via the travel mechanism not illustrated in the drawings.

The travel mechanism causes the pair of sensor heads 20 to travel horizontally along the beams 11. An upper sensor head 20a of the pair of sensor heads 20 that is arranged on an upper side is supported by the upper beam 11a via the travel mechanism and the travel mechanism causes the upper sensor head 20a to travel horizontally along the upper beam 11a. A lower sensor head 20b of the pair of sensor heads 20 that is arranged on a lower side is supported by the lower beam 11b via the travel mechanism and the travel mechanism causes the lower sensor head 20b to travel horizontally along the lower beam 11b.

As illustrated in FIG. 3, when the electric unit 30 is in the first position P1, the first evacuation area R1 is an area of origin of the sensor heads 20. As illustrated in FIG. 4, when the electric unit 30 is in the second position P2, the second evacuation area R2 is the area of origin of the sensor heads 20. In other words, the evacuation area on the same side as that of the position in which the electric unit 30 is arranged with respect to the support 10 is the area of origin of the sensor heads 20.

When the first evacuation area R1 is the area of origin of the sensor heads 20, the sensor heads 20 scan the subject S while traveling horizontally in the longitudinal direction of the support 10 in an area on the other side of the support 10 with respect to the first evacuation area R1, that is, on the left side. When the second evacuation area R2 is the area of origin of the sensor heads 20, the sensor heads 20 scan the subject S while traveling horizontally in the longitudinal direction of the support 10 in an area on the one side of the support 10 with respect to the second evacuation area R2, that is, on the right side. The area of origin of the sensor heads 20 has the same spaces respectively on both sides of the first evacuation area R1 and the second evacuation area R2 with respect to a sheet width of the subject S.

One of the upper sensor head 20a and the lower sensor head 20b has a radiation source that radiates X-rays. The other one has a detector that detects X-rays that are radiated from the radiation source and that have passed through the subject S. The radiation source and the detector are opposed to each other while the pair of sensor heads 20 are scanning the subject S. The pair of sensor heads 20 detect a parameter of the sheet-like subject S using radiation. The pair of sensor heads 20 sequentially outputs detection signals of the acquired parameter toward the electric unit 30 via the cable 40.

The electric unit 30 controls measurement of a parameter using the sensor heads 20. The electric unit 30 integrally includes a transformer, a power source, a control device such as a programmable logic controller (PLC), a control board, a driver for driving the travel mechanism that causes the pair of sensor heads 20 to travel, a measurement arithmetic operator, and an input/output connection port. Each of the components that the electric unit 30 includes is not installed individually on the support 10 directly and the components are housed in a storage in a mode of, for example, a local box forming a cluster.

Arrangement of the electric unit 30 is changeable in position to either the first position P1 on the one side of the support 10 or the second position P2 on the other side according to a place where the measurement apparatus 1 is installed. The first position P1 and the second position P2 are positioned on both sides of the support 10 of the measurement apparatus 1 in the longitudinal direction. More specifically, the first position P1 is a position along the second side surface 14c on the one side of the support 10 in the longitudinal direction. The second position P2 is a position along the second side surface 14c on the other side of the support 10 in the longitudinal direction. It is possible to shift the electric unit 30 from the first position P1 to the second position P2, for example, when the place in which the measurement apparatus 1 is installed is changed and a different specification is necessary with respect to arrangement of the electric unit 30.

The electric unit 30 includes a mount structure 31 with which the electric unit 30 is mounted on the support 10 in the first position P1 or the second position P2. The mount structure 31 contains a structure attachable to the support 10 by thread engagement, fitting, engagement, or the like. The mount structure 31 includes a hanger structure 31a such that the electric unit 30 serving as a local box is easily replaceable on the support 10. The mount structure 31 further includes a screw fastening structure 31b that is fastened by screw to a side surface of the support 10 via a fixation bracket that is fastened by screw to a side of a side surface of the local box.

The electric unit 30, for example, is hung on the first corner C1 of the support 10 on the one side with the hanger structure 31a and is fixed to the second side surface 14c of the support 10 on the right side with the screw fastening structure 31b. When the electric unit 30 is shifted from the first position P1 to the second position P2, the electric unit 30, for example, is hung on the second corner C2 of the support 10 on the other side with the hanger structure 31a and is fixed to the second side surface 14c of the support 10 on the left side with the screw fastening structure 31b.

The electric unit 30 of the measurement apparatus 1, for example, the control device and the driver control the travel mechanism that causes the pair of sensor heads 20 to travel, generate power, and cause the pair of sensor heads 20 to travel respectively along the beams 11 using the power. The electric unit 30 causes the upper sensor head 20a and the lower sensor head 20b to travel in synchronization. The electric unit 30 sequentially acquires detection signals of the parameter of the subject S that the sensor heads 20 output while being caused by the travel mechanism to travel along the beams 11.

Using the pair of sensor heads 20 including the upper sensor head 20a and the lower sensor head 20b, the electric unit 30 of the measurement apparatus 1, for example, the measurement arithmetic operator measures an amount of transmission attenuation of radiation caused by the subject S based on the acquired detection signals. The electric unit 30 previously performs the same measurement on a plurality of samples whose parameters are known and calculate calibration curves. The electric unit 30 is able to calculate a parameter of the subject S from the relationship between the amount of transmission attenuation and the previously-calculated calibration curves.

The opposed unit 35 is mounted on the support 10. The opposed unit 35 is provided in a position opposed to the electric unit 30. Specifically, as illustrated in FIG. 3, when the electric unit 30 is mounted in the first position P1, the opposed unit 35 is mounted in the second position P2. When the electric unit 30 is mounted in the first position P1, the opposed unit 35 is provided such that the opposed unit 35 blocks a side surface opening 10b that is formed on the second side surface 14c of the support 10. As illustrated in FIG. 4, when the electric unit 30 is mounted in the second position P2, the opposed unit 35 is mounted in the first position P1. When the electric unit 30 is mounted in the second position P2, the opposed unit 35 is provided such that the opposed unit 35 blocks a side surface opening 10a that is formed on the first side surface 14b of the support 10.

The side surface opening 10a or 10b that is not blocked by the opposed unit 35 is blocked by the electric unit 30. As described above, a casing 2 surrounding the pair of sensor heads 20 in the measurement apparatus 1 is structured such that the casing 2 contains the support 10, the electric unit 30, and the opposed unit 35.

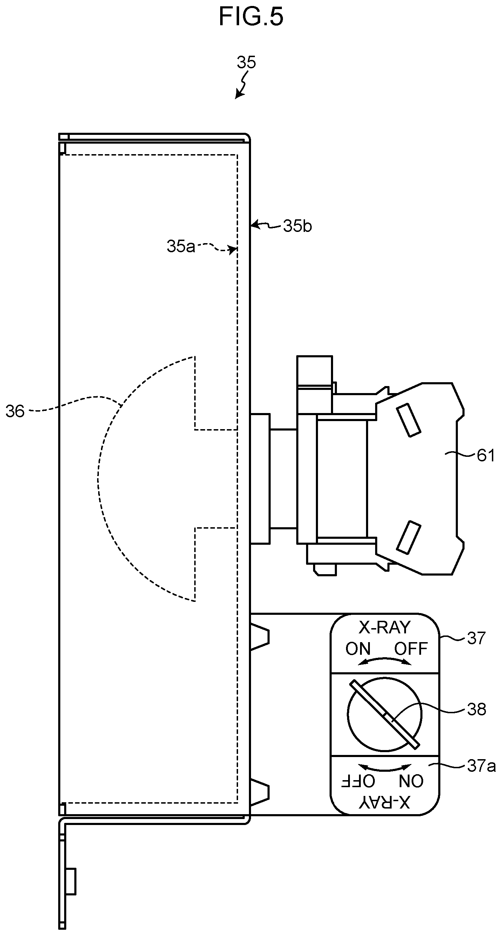

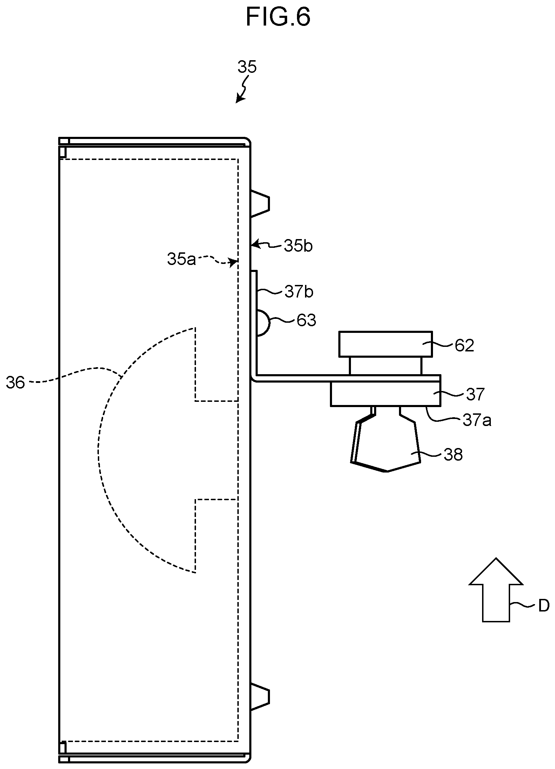

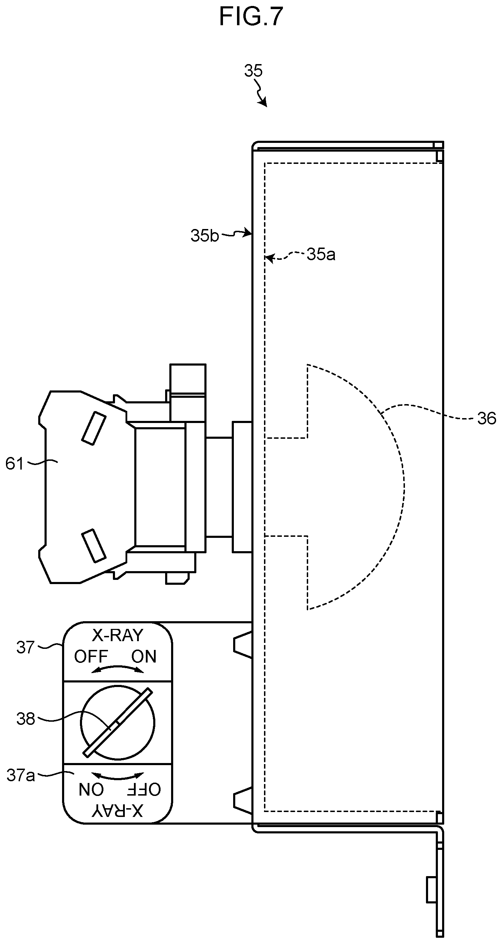

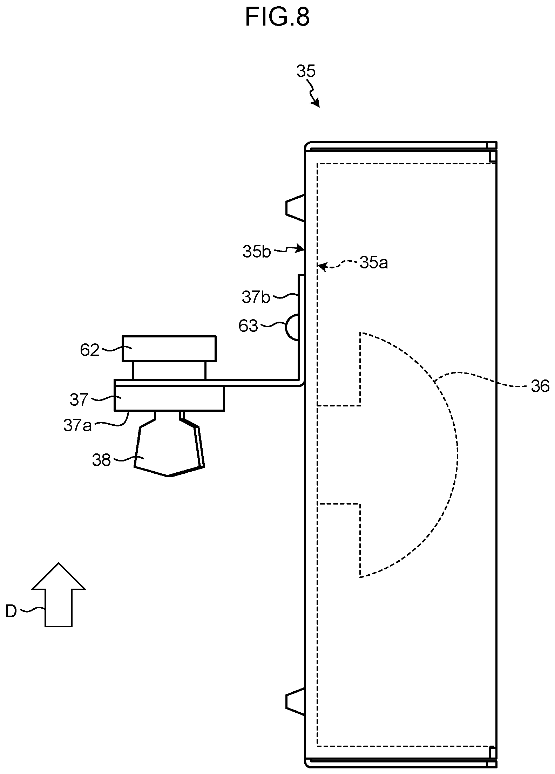

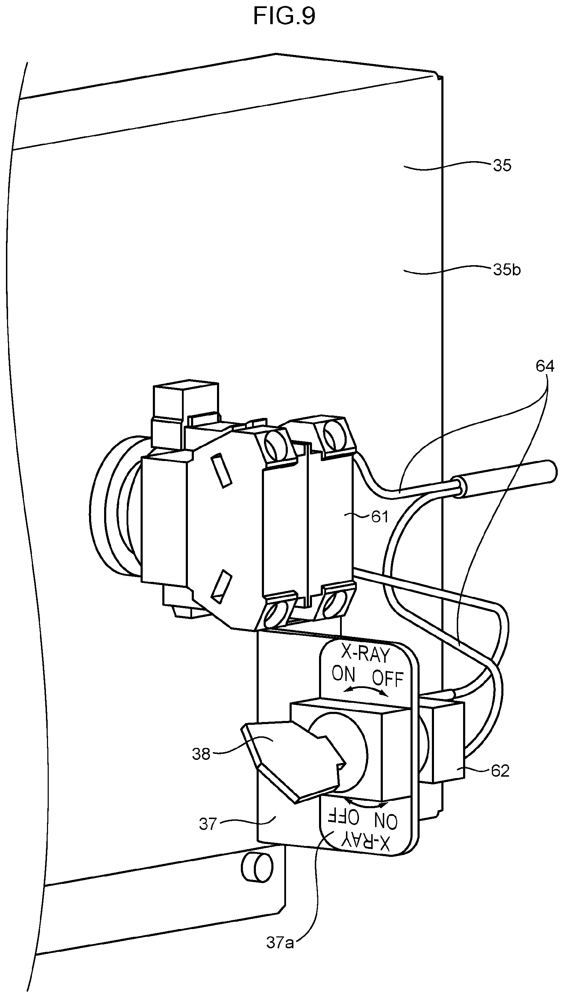

The first operation unit 36 and the second operation unit 37 are mounted on the opposed unit 35. FIG. 5 is a diagram of the opposed unit on which the first operation unit and the second operation unit are mounted, viewed along a depth direction. FIG. 6 is a diagram of the opposed unit illustrated in FIG. 5, viewed from an upper side. FIG. 7 is a diagram of the opposed unit on which the first operation unit and the second operation unit are mounted in the first position, viewed along the depth direction. FIG. 8 is a diagram of the opposed unit illustrated in FIG. 7, viewed from the upper side. FIG. 9 is a perspective view of a part of the opposed unit mounted in the second position, viewed from an inner side of the casing. The opposed unit 35 includes a first surface 35a facing the outside of the casing 2 and a second surface 35b facing the inside of the casing 2.

The first operation unit 36 is provided such that the first operation unit 36 protrudes from the first surface 35a of the opposed unit 35 toward the outside of the casing 2. The first operation unit 36 is operable to be pushed to the side of the first surface 35a.

The second operation unit 37 is mounted on the second surface 35b. A key 38 is insertable into the second operation unit 37. In the second operation unit 37, the inserted key 38 is operable to rotate. As illustrated in FIG. 5, a surface of the second operation unit 37 facing a side on which the key 38 is pulled out is an information display surface 37a. Information on operations on the key 38 is displayed on the information display surface 37a. For example, as illustrated in FIG. 5 and FIG. 7, information in which positions of rotation of the key 38 and X-ray radiation states (ON/OFF) are associated to each other is presented. Information is displayed on the information display surface 37a in a vertically symmetric manner.

The position in which the second operation unit 37 is mounted on the opposed unit 35 is changeable. As illustrated in FIG. 6 and FIG. 8, a fixation unit 37b is formed in the second operation unit 37. Fixing the fixation unit 37b to the second surface 35b of the opposed unit 35 with a screw 63 mounts the second operation unit 37 on the opposed unit 35.

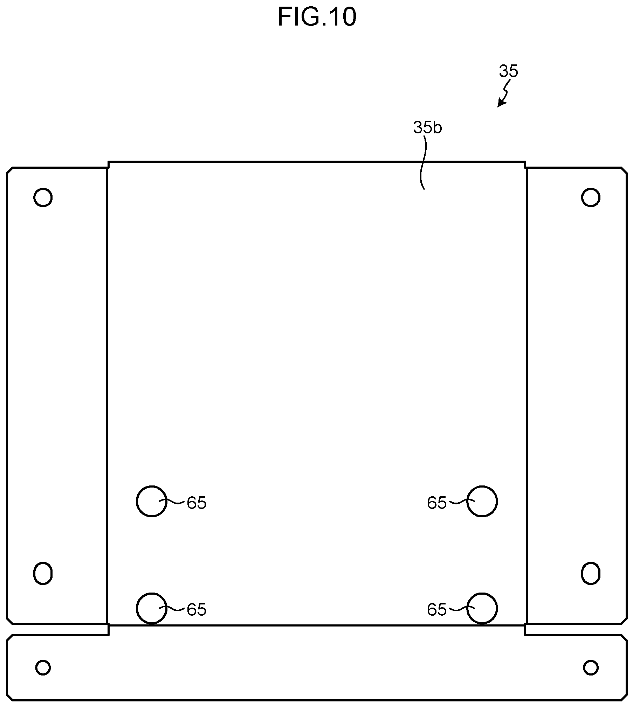

FIG. 10 is a diagram of the opposed unit viewed from the side of the second surface. On the second surface 35b of the opposed unit 35, a hole 65 into which the screw 63 is turned is formed in both of a position separated from the center of the casing 2 in the depth direction toward the front side along the depth direction and a position separated toward the back side. For this reason, both in the case where the opposed unit 35 is mounted in the first position P1 and in the case where the opposed unit 35 is mounted in the second position P2, there is the hole 65 positioned on the back side with respect to the center of the casing 2 in the depth direction. Thus, fixing the second operation unit 37 using the hole 65 positioned on the back side with respect to the center of the casing 2 in the depth direction makes it possible to, as illustrated in FIG. 6 and FIG. 8, mount the second operation unit 37 on the back side with respect to the center of the casing 2 in the depth direction in the case where the opposed unit 35 is mounted either in the first position P1 or in the second position P2. Note that the holes 65 that are not used may be covered with grommets.

The holes 65 are formed symmetrically vertically and this makes it possible to mount the second operation unit 37 with the information display surface 37a whose orientation is different by 180 degrees. More specifically, the orientation of the information display surface 37a with respect to the opposed unit 35 is different by 180 degrees between an orientation with the information display surface 37a being oriented toward the front side when the opposed unit 35 is mounted in the first position P1 and an orientation with the information display surface 37a being oriented toward the front side when the opposed unit 35 is mounted in the second position P2, and the second operation unit 37 can be mounted in such a manner.

Causing the information display surface 37a to take a different orientation according to the position in which the opposed unit 35 is mounted enables a change in a direction in which the key 38 is pulled out. For example, both in the case where the opposed unit 35 is mounted in the first position P1 and in the case where the opposed unit 35 is mounted in the second position P2, orienting the information display surface 37a toward the front side makes the direction in which the key 38 is pulled out be on the front side.

A terminal area 61 is provided in a part serving as a back side of the first operation unit 36 in the second surface 35b of the opposed unit 35. A terminal area 62 is provided on a back side of the information display surface 37a of the second operation unit 37. As illustrated in FIG. 9, the terminal area 61 and the terminal area 62 are connected via wires 64. In the measurement apparatus 1, a circuit with which power is supplied to the pair of sensor heads 20 via the terminal area 61 and the terminal area 62, which are connected via the wires 64, is formed. The pushing operation on the first operation unit 36 or the rotation operation on the key 38 inserted into the second operation unit 37 opens the contact and supplying power to the pair of sensor heads 20 is stopped.

In other words, the first operation unit 36 functions as an emergency stop button that stops radiation of X-rays according to the pushing operation. Note that the pushing operation on the first operation unit 36 may stop the operation of the measurement apparatus 1.

Performing the rotation operation on the inserted key 38 to cause the key 38 to have a different angle of rotation enables the second operation unit 37 to switch between a state setting enabling radiation of X-rays and a state setting disabling radiation of X-rays. For example, pulling the key 38 out in the state setting disabling radiation of X-rays leads to a state where a person without the key 38 is unable to cause radiation of X-rays.

The cable 40 connects the pair of sensor heads 20 and the electric unit 30 to each other. The cable 40 also is connected to the pair of switches 50 and the electric unit 30. In addition to this, the cable 40 includes a power line, a signal line, and a communication line. At least part of the cable 40 is arranged outside the support 10. For example, the cable 40 is arranged such that the cable 40 is partly contained in a hollow part of the O-shape frame forming the support 10 and such that the rest of the cable 40 partly extends from a center part of the lower beam 11b to the outside of the O-shape frame and is connected from the outside to the electric unit 30.

In association with the shift of the electric unit 30 from the first position to the second position P2, arrangement of the cable 40 outside the O-shape frame is changed. More specifically, when the electric unit 30 is in the first position P1, the cable 40 extends from the center part of the lower beam 11b toward the one side of the support 10 to the electric unit 30. On the other hand, when the electric unit 30 is shifted from the first position P1 to the second position P2, the cable 40 extends from the center part of the lower beam 11b toward the other side of the support 10 to the electric unit 30.

The cable 40 is pulled out to the outside of the local box serving as the electric unit 30 and has an appropriate extra enabling the cable 40 to be shifted to the opposite side of the O-shape frame together with the electric unit 30 without changing the wiring inside the O-shape frame and the local box. When inversion of the electric unit 30 finishes and the mount structure 31 fixes the electric unit 30 to the support 10, the cable 40 is arranged and fixed appropriately along the O-shape frame.

The pair of switches 50 are mounted on the support 10 respectively on the side of the first position P1 of the support 10 and on the side of the second position P2 of the support 10.

For example, the pair of switches 50 are mounted respectively on both the side of the first position P1 and the side of the second position P2 along the upper beam 11a of the support 10. The pair of switches 50 are positioned on an outer side in the longitudinal direction of the support 10 with respect to the upper sensor head 20a being positioned in the area of origin of the sensor heads 20 respectively in the first evacuation area R1 and the second evacuation area R2.

For example, the pair of switches 50 are mounted respectively on both the side of the first position P1 and the side of the second position P2 along the lower beam 11b of the support 10. The pair of switches 50 are positioned on an outer side in the longitudinal direction of the support 10 with respect to the lower sensor head 20b being positioned in the area of origin of the sensor heads 20 respectively in the first evacuation area R1 and the second evacuation area R2.

The switches 50 include, for example, a limit switch. Under the control of the electric unit 30, the pair of switches 50 switch a definition of the origin of the sensor heads 20 and functions of controlling the travel of the sensor heads 20 according to an arrangement of the electric unit 30.

For example, when the electric unit 30 is in the first position P1, the switch 50 mounted on the side of the first position P1 along the upper beam 11a defines the origin of the upper sensor head 20a. The switch 50 mounted on the side of the second position P2 along the upper beam 11a performs travel control such that the upper sensor head 20a does not travel excessively toward the other side of the support 10. When the electric unit 30 is shifted from the first position P1 to the second position P2, the functions of the switch 50 mounted on the side of the first position P1 along the upper beam 11a and of the switch 50 mounted on the side of the second position P2 along the upper beam 11a are switched.

For example, when the electric unit 30 is in the first position P1, the switch 50 mounted on the side of the first position P1 along the lower beam 11b defines the origin of the lower sensor head 20b. The switch 50 mounted on the side of the second position P2 along the lower beam 11b performs travel control such that the lower sensor head 20b does not travel excessively toward the other side of the support 10. When the electric unit 30 is shifted from the first position P1 to the second position P2, the functions of the switch 50 mounted on the side of the first position P1 along the lower beam 11b and of the switch 50 mounted on the side of the second position P2 along the lower beam 11b are switched.

In the measurement apparatus 1 described above, it is possible to change the positions in which the electric unit 30 and the opposed unit 35 are set according to conditions for installing the measurement apparatus 1 on a production line. For example, when an aisle that the operating person passes is provided only on the one side or the other side with respect to the measurement apparatus 1, it is preferable that the opposed unit 35 provided with the first operation unit 36 functioning as an emergency stop button be mounted on the side of the aisle and the electric unit 30 be mounted on the other side. Not limited to this, the positions in which the electric unit 30 and the opposed unit 35 are set may be determined freely according to convenience for the operating person with respect to the production line.

Maintenance on the measurement apparatus 1 is performed from the side on which the electric unit 30 is provided in general. For this reason, the evacuation area of the pair of sensor heads 20 may be set on the side where the electric unit 30 is provided, the evacuation area may be used as the area of origin of the sensor heads 20, and scanning by the pair of sensor heads 20 may be started from the area of origin of the sensor heads 20. Not limited to this, the evacuation area of the pair of sensor heads 20 may be determined freely according to convenience for the operating person with respect to the production line. The area of origin of the sensor heads 20 may accommodate to other apparatuses on production lines by software processing using the electric unit 30.

According to the measurement apparatus 1 according to the embodiment described above, the positions in which the electric unit 30 and the opposed unit 35 provided such that the opposed unit 35 is opposed to the electric unit 30 are mounted are changeable between the first position P1 and the second position P2. The opposed unit 35 is provided with the second operation unit 37 enabling a switch between the state setting enabling radiation of X-rays and the state setting disabling radiation of X-rays according to operations on the first operation unit 36 functioning as an emergency stop button and the key 38. Thus, the positions of the first operation unit 36 and the second operation unit 37 are changeable between the first position P1 and the second position P2 together with the opposed unit 35.

The first operation unit 36 is provided outside the casing 2 and therefore it is possible to stop radiation of X-rays by performing the pushing operation immediately in an emergency, or the like. The second operation unit 37 is provided inside the casing 2 and therefore it is prevented that the second operation unit 37 is operated carelessly and that radiation of X-rays is stopped.

The second operation unit 37 is mountable in different orientations with respect to the opposed unit 35 and different orientations cause the second operation unit 37 to be mounted in a orientation allowing the key 38 to be pulled out to the front side in both the first position P1 and the second position P2. Accordingly, it is possible to access the key 38 from the opening 13 on the front side of the measurement apparatus 1 and perform the rotation operation when the opposed unit 35 is mounted either in the first position P1 or in the second position P2.

The information on the operations on the key 38 is displayed on the information display surface 37a of the second operation unit 37 in a vertically symmetric manner. The orientation in which the second operation unit 37 is mounted is inverted vertically between the case where the second operation unit 37 is mounted in an orientation allowing the key 38 to be pulled out to the front side in the first position P1 and the case where the second operation unit 37 is mounted in an orientation allowing the key 38 to be pulled out to the front side in the second position P2. As described above, because the information on the operations on the key 38 is displayed on the information display surface 37a of the second operation unit 37 in a vertically symmetric manner, the information is displayed in a state of being recognizable easily by a person who operates the measurement apparatus 1.

The second operation unit 37 is mountable on the back side with respect to the center of the casing 2 in the depth direction in both the case where the opposed unit 35 is arranged in the first position P1 and the case where the opposed unit 35 is arranged in the second position P2. In the measurement apparatus 1, the second operation unit 37 is arranged on the back side of the first side surface 14b of the first stand 12a or on the back side of the first side surface 14b of the second stand 12b in some cases. In that case, when the second operation unit 37 is arranged at the center or the front side in the depth direction, the first stand 12a or the second stand 12b is disturbing and it is difficult to perform operations of pulling the key 38 out and inserting the key 38 in some cases. As described above, because the second operation unit 37 is mountable on the back side with respect to the center of the casing 2 in the depth direction in both the case where the opposed unit 35 is arranged in the first position P1 and the case where the opposed unit 35 is arranged in the second position P2, it is possible to achieve the measurement apparatus 1 in which the operations of pulling the key 38 out and inserting the key 38 are performed easily with the first stand 12a and the second stand 12b not disturbing.

In the measurement apparatus 1, because arrangement of the electric unit 30 is changeable to any one of the first position P1 and the second position P2 according to the place where the measurement apparatus 1 is installed, it is possible to constantly manufacture the measurement apparatuses 1 of the same model in manufacturing the measurement apparatuses 1. It is possible to manufacture and ship the measurement apparatuses 1 of the same model, select an appropriate position from the first position P1 and the second position P2 according to the place of installation in a production plant where the subject S is produced, and arrange the electric unit 30.

The local box serving as the electric unit 30 can be shifted easily and this inhibits occurrence of big trouble, for example, that the measurement apparatus 1 after being manufactured cannot be installed on a production line due to a specification error, an opposite-hand mistake, and the like as in a conventional technique. This reduces necessity of starting manufacturing the measurement apparatuses 1 after a specification is made clear with respect to each place where the measurement apparatus 1 is installed in a production line when an order to manufacture the measurement apparatuses 1 is accepted and thus it is possible to start manufacturing the measurement apparatuses 1 before the specification is made clear. Accordingly, it is possible to have a leeway of a deadline of delivery of the measurement apparatuses 1 and increase productivity for the measurement apparatuses 1.

Enabling scheduled production of the measurement apparatuses 1 as described above makes it easy to manufacture the measurement apparatuses 1 before a specification is determined clearly and stocks the measurement apparatuses 1. Accordingly, a variation in load of manufacture according to a physical load is inhibited. As a result, efficiency in manufacturing the measurement apparatuses 1 increases. For example, in accepting a large order of a lot exceeding 100 apparatuses, it is possible to show an advantage in a delivery deadline against competitors because of stock production and the like.

As for the measurement apparatus 1, manufacturing a large number of opposite-hand parts is unnecessary and an assembling method is uniform, which increases assembling operation efficiency. Assembling errors in operations of assembling the measurement apparatus 1 are also inhibited. In addition to this, even when a change in a specification of installation of the measurement apparatus 1 suddenly occurs on a production line for producing the subjects S, it can be dealt with by only changing arrangement of the electric unit 30 and the like on site on the production line. Accordingly, an operation delay with respect to production of the subjects S, a delivery delay in delivering the subjects S as products, and the like are inhibited.

The electric unit 30 includes the mount structure 31 with which the electric unit 30 is mounted on the support 10 in the first position P1 or the second position P2 and this makes it possible to fix the electric unit 30 to the support 10 stably and easily in the first position P1 or the second position P2.

The support 10 has the first evacuation area R1 and the second evacuation area R2 and this makes it possible to symmetrically form the components of the measurement apparatus 1 including the support 10 and the pair of sensor heads 20. Thus, as described above, it is possible to constantly manufacture the measurement apparatuses 1 of the same model in manufacturing the measurement apparatuses 1 without consideration of an opposite hand and cause the measurement apparatus 1 to operate symmetrically according to the place of installation on the production line.

The evacuation area on the same side as that of the electric unit 30 is the area of origin of the sensor heads 20 and accordingly the area of origin of the sensor heads 20 and the electric unit 30 are easily set together on the back side that is an apparatus maintenance side according to the customary practice.

The pair of switches 50 switch the definition of the origin of the sensor heads 20 and functions of controlling the travel of the sensor heads 20 according to an arrangement of the electric unit 30. Thus, as described above, it is possible to constantly manufacture the measurement apparatuses 1 of the same model in manufacturing the measurement apparatuses 1 without consideration of an opposite hand and cause the measurement apparatus 1 to operate symmetrically according to the place of installation on the production line.

At least part of the cable 40 that connects the pair of sensor heads 20 and the electric unit 30 to each other is arranged outside the support 10. This makes it possible to appropriately place the cable 40 with respect to the support 10 according to a shift of the electric unit 30 from one of the first position P1 and the second position P2 to the other.

The support 10 is the O-shape frame including the pair of beams 11, the first stand 12a that connects ends of the pair of beams 11 on the one side. The support 10 includes the second stand 12b that connects ends of the pair of beams 11 on the other side. This increases robustness of the support 10.

The first position P1 is the position on the one side of the O-shape frame in the longitudinal direction and the second position P2 is the position in the longitudinal direction on the other side and thus it is possible to set the electric unit 30 and the evacuation areas for the pair of sensor heads 20 in the direction D of conveyance of the subject S according to practices.

The subject S includes a battery electrode sheet and thus the measurement apparatus 1 is able to perform measurement on a battery electrode sheet and measure a parameter on a production line for producing battery electrode sheets.

The parameter includes the basis weight of the subject S and thus the measurement apparatus 1 is able to measure the basis weight of the sheet-like subject on the production line for producing the sheet-like subject.

The support 10 serving as the O-shape frame and the electric unit 30 serving as the local box are separated from each other as components and thus it is possible to separate steps of manufacturing the support 10 and the electric unit 30. This makes it easy to deal with volume production of the measurement apparatuses 1. For example, when an electric device, a control device, a communication device, etc., are installed individually in a hollow part of the O-shape frame and wiring, piping, a test, etc., are performed, a bottleneck in production in volume production occurs and the measurement apparatus 1 is able to inhibit occurrence of such a bottleneck.

Configuring the electric unit 30 as a local box enables compatibility between a plurality of the electric units 30. In this case, for example, when trouble occurs in the electric unit 30, or the like, and a quick recovery is requested, it is possible to complete the recovery by only preparing a unit of another electric unit 30 and replacing the electric unit 30. In addition to this, examining and managing the unit of the replaced electric unit 30 make it easy to isolate a problem that is the cause of the trouble.

It is clear to those skilled in the art that the present disclosure can be achieved in a given mode other than the above-described embodiment without departing from the spirit and essential features of the disclosure. The description above is thus exemplary and the disclosure is not limited to this. The scope of the disclosure is defined not by the description above but by the claims added. The claims cover some changes within a range of equivalents of the claims among various changes.

For example, the shape, size, arrangement, and orientation of each of the above-described components and the number of components are not limited to the content of the description above and illustration of the drawings. The shape, size, arrangement, and orientation of each of the above-described components and the number of components may be formed freely as long as the function of each of the components can be implemented. Each of the elements of the measurement apparatus 1 illustrated in the drawings is a functional concept and a specific mode of each of the elements is not limited to that illustrated in the drawings.

In the above-described embodiment, it is described that the electric unit 30 includes the mount structure 31 with which the electric unit 30 is mounted on the support 10 in the first position P1 or the second position P2; however, the electric unit 30 is not limited to this. The electric unit 30 need not include the mount structure 31. The electric unit 30 may be arranged in a position separated from the support 10 in the first position P1 or the second position p2.

In the above-described embodiment, it is described that the support 10 has the first evacuation area R1 and the second evacuation area R2 where the subject S is not present respectively on the side of the first position P1 and the side of the second position P2; however, the support 10 is not limited to this. The support 10 may have only any one of the first evacuation area R1 and the second evacuation area R2.

In the above-described embodiment, it is described that the first evacuation area R1 is the area of origin of the sensor heads 20 when the electric unit 30 is in the first position P1 and the second evacuation area R2 is the area of origin of the sensor heads 20 when the electric unit 30 is in the second position P2; however, the areas of origin are not limited to this. The area of origin of the sensor heads 20 may be an evacuation area on a side opposite to the position in which the electric unit 30 is arranged with respect to the support 10. The evacuation area of the pair of sensor heads 20 need not be changed from one of the first evacuation area R1 and the second evacuation area R2 to the other according to the shift of the electric unit 30, and the evacuation area may be fixed to any one of the first evacuation area R1 and the second evacuation area R2.

In the above-described embodiment, it is described that the pair of switches 50 switch the definition of the origin of the sensor heads 20 and functions of controlling the travel of the sensor heads 20 according to an arrangement of the electric unit 30; however, the pair of switches 50 are not limited to this. For example, in the case where the evacuation area of the pair of sensor heads 20 is fixed regardless of a shift of the electric unit 30, the pair of switches 50 need not switch the definition of the origin of the sensor heads 20 and functions of controlling the travel of the sensor heads 20 each other.

In the above-described embodiment, it is described that the measurement apparatus 1 includes the cable 40; however, the measurement apparatus 1 is not limited to this. The measurement apparatus 1 need not include the cable 40 and, for example, the pair of sensor heads 20 and the electric unit 30 may be connected such that the sensor heads 20 and the electric unit 30 are able to communicate by radio communication. It is described that the cable 40 extends from the center part of the lower beam 11b to the outside of the O-shape frame; however, the cable 40 is not limited to this. The cable 40 may extend from, instead of the lower beam 11b, any one of the upper beam 11a, the first stand 12a, and the second stand 12b to the outside of the O-shape frame.

In the above-described embodiment, it is described that the support 10 is the O-shape frame; however, the support 10 is not limited to this. The support 10 may be formed of a frame structure and a casing structure or the like in any shape such that the pair of sensor heads 20 is able to travel horizontally and scan the subject S. Alternatively, the support 10 may be formed of a box structure covering the whole part of the opening 13 with only an area that the subject S passes being left in the opening 13.

In the above-described embodiment, it is described that the first position P1 on the one side of the support 10 is the position along the second side surface 14c on the one side of the support 10 in the longitudinal direction; however, the first position P1 is not limited to this. The first position P1 on the one side of the support 10 may be a position along a part positioned on the one side on the first side surface 14b of the support 10 in the longitudinal direction. It is described that the second position P2 on the other side of the support 10 is the position along the second side surface 14c on the one side of the support 10 in the longitudinal direction; however, the second position P2 is not limited to this. The second position P2 on the other side of the support 10 may be a position along a part positioned on the other side on the first side surface 14b of the support 10 in the longitudinal direction.

In the above-described embodiment, the first position P1 is the position on one side of the O-shape frame in the longitudinal direction and the second position P2 is the position on the other side in the longitudinal direction; however, the first position P1 and the second position P2 are not limited to this. For example, the first position P1 is a position on one side of the O-shape frame in a lateral direction and the second position P2 is a position on the other side in the lateral direction.

In the above-described embodiment, it is described that the subject S includes a battery electrode sheet; however, the subject S is not limited to this. The subject S may include any other product that is produced in a sheet-like form on a production line.

In the above-described embodiment, it is described that the measurement apparatus 1 includes an online thickness gauge that is arranged on a production line; however, the measurement apparatus 1 is not limited to this. The measurement apparatus 1 may include any other relatively small-sized or medium-sized apparatus in which an opposite hand can occur depending on the production line conventionally. The medium-sized apparatus includes, for example, an apparatus in a size whose cluster of units forming the apparatus can be moved by approximately two operating persons.

In addition to the description of the above-described embodiment, the storage of the electric unit 30 having a local box structure may be assigned with a function according to a specification, such as being dust-proof, being drip-proof, and electromagnetic compatibility (EMC), by selecting a function appropriately.

In addition to the description of the above-described embodiment, when air is used in the support 10, or the like, the electric unit 30 may integrally contain an air device for controlling air in a local box. In that case, in the measurement apparatus 1, an air tube for sending air, or the like, may be arranged along the support 10 as the cable 40 is.

### Others

Some examples of a combination of the disclosed technical features will be described below.
(1) A measurement apparatus that measures a parameter of a sheet-like subject, the measurement apparatus comprising: a pair of sensor heads that are separated from each other, that travel horizontally while being opposed to each other, and that scan a subject being positioned between the sensor heads; a support that supports the pair of sensor heads such that the sensor heads are movable in a horizontal direction; an electric unit (30) that is mounted on the support and is changeable in position to either a first position on one side along a travel direction in which the sensor heads travel or a second position on the other side along the travel direction, and that controls measurement of the parameter using the sensor heads; an opposed unit that is mounted in the second position when the electric unit is mounted in the first position and that is mounted in the first position when the electric unit is mounted in the second position; a first operation unit that is mounted on the opposed unit and that stops supplying power to the sensor heads; and a second operation unit that is mounted on the opposed unit and that switches between supplying power to the sensor heads and stopping the supply according to an operation on an insertable key.
(2) The measurement apparatus according to (1), wherein at least one of the pair of sensor heads is an X-ray radiation unit that radiates X-rays.
(3) The measurement apparatus according to (1) or (2), wherein a casing that surrounds the pair of sensor heads is structured such that the casing contains the support, the electric unit, and the opposed unit; the first operation unit is provided outside the casing; and the second operation unit is provided inside the casing.
(4) The measurement apparatus according to (3), wherein, when a direction perpendicular to both a vertical direction and the travel direction is defined as a depth direction, one side along the depth direction is a front side, and the other side along the depth direction is a back side, an opening is formed on the front side in the casing, and the second operation unit is mountable in different orientations with respect to the opposed unit, and different orientations cause the second operation unit to be mounted in an orientation allowing the key to be pulled out to the front side in both the first position and the second position.
(5) The measurement apparatus according to (4), wherein information on operations on the key is displayed on the second operation unit in a vertically symmetric manner.
(6) The measurement apparatus according to (4) or (5), wherein the second operation unit is mountable on the back side with respect to a center of the casing in the depth direction in both a case where the opposed unit is arranged in the first position and a case where the opposed unit is arranged in the second position.
(7) The measurement apparatus according to any one of (1) to (6), wherein the electric unit includes a mount structure with which the electric unit is mounted on the support in the first position or the second position.
(8) The measurement apparatus according to any one of (1) to (7), wherein the support has a first evacuation area and a second evacuation area where the subject is not present respectively on a side of the first position of the support and a side of the second position of the support.
(9) The measurement apparatus according to (8), wherein the first evacuation area is an area of origin of the sensor heads when the electric unit is in the first position and the second evacuation area is the area of origin of the sensor heads when the electric unit is in the second position.
(10) The measurement apparatus according to (8) or (9), further comprising a pair of switches that are mounted on the support respectively on the side of the first position of the support and on the side of the second position of the support and that switch a definition of an origin of the sensor heads and functions of controlling travel of the sensor heads according to an arrangement of the electric unit.
(11) The measurement apparatus according to (1), further comprising a cable that connects the pair of sensor heads and the electric unit to each other and at least part of the cable is arranged outside the support.
(12) The measurement apparatus according to (1), wherein the support is an O-shape frame including a pair of beams that support the pair of sensor heads, respectively, a first stand that connects ends of the pair of beams on the one side, and a second stand that connects ends of the pair of beams on the other side.
(13) The measurement apparatus according to (12), wherein the first position is a position on the one side of the O-shape frame in a longitudinal direction, and
   the second position is a position on the other side in the longitudinal direction.
(14) The measurement apparatus according to any one of (1) to (13), wherein the subject includes a battery electrode sheet.
(15) The measurement apparatus according to any one of (1) to (14), wherein the parameter includes a basis weight of the subject.

According to the disclosure, there is an effect that it is possible to obtain the measurement apparatus in which the position in which the electric unit is mounted is changeable.

Although the disclosure has been described with respect to specific embodiments for a complete and clear description, the appended claims are not to be thus limited but are to be construed as embodying all modifications and alternative constructions that may occur to one skilled in the art that fairly fall within the basic teaching herein set forth.

## Claims

1. A measurement apparatus (1) that measures a parameter of a sheet-like subject, the measurement apparatus (1) comprising:
a pair of sensor heads (20) that are separated from each other, travel horizontally while being opposed to each other, and scan a subject being positioned between the sensor heads (20);
a support (10) that supports the pair of sensor heads (20) such that the sensor heads (20) are movable in a horizontal direction;
an electric unit (30) that is mounted on the support (10) and is changeable in position to either a first position on one side along a travel direction in which the sensor heads (20) travel or a second position on the other side along the travel direction, and that controls measurement of the parameter using the sensor heads (20);
an opposed unit (35) that is mounted in the second position when the electric unit (30) is mounted in the first position and that is mounted in the first position when the electric unit (30) is mounted in the second position;
a first operation unit (36) that is mounted on the opposed unit (35) and that stops supplying power to the sensor heads (20); and
a second operation unit (37) that is mounted on the opposed unit (35) and that switches between supplying power to the sensor heads (20) and stopping the supply according to an operation on an insertable key (38).

2. The measurement apparatus (1) according to claim 1, wherein at least one of the pair of sensor heads (20) is an X-ray radiation unit that radiates X-rays.

3. The measurement apparatus (1) according to claim 1 or 2, wherein a casing (2) that surrounds the pair of sensor heads (20) is structured such that the casing (2) contains the support (10), the electric unit (30), and the opposed unit (35);
the first operation unit (36) is provided outside the casing (2); and
the second operation unit (37) is provided inside the casing (2).

4. The measurement apparatus (1) according to claim 3, wherein, when a direction perpendicular to both a vertical direction and the travel direction is defined as a depth direction, one side along the depth direction is a front side, and the other side along the depth direction is a back side,
an opening is formed on the front side in the casing (2), and
the second operation unit (37) is mountable in different orientations with respect to the opposed unit (35), and different orientations cause the second operation unit (37) to be mounted in an orientation allowing the key to be pulled out to the front side in both the first position and the second position.

5. The measurement apparatus (1) according to claim 4, wherein information on operations on the key is displayed on the second operation unit (37) in a vertically symmetric manner.

6. The measurement apparatus (1) according to claim 4 or 5, wherein the second operation unit (37) is mountable on the back side with respect to a center of the casing (2) in the depth direction in both a case where the opposed unit (35) is arranged in the first position and a case where the opposed unit (35) is arranged in the second position.

7. The measurement apparatus (1) according to any one of claims 1 to 6, wherein the electric unit (30) includes a mount structure with which the electric unit (30) is mounted on the support (10) in the first position or the second position.

8. The measurement apparatus (1) according to any one of claims 1 to 7, wherein the support (10) has a first evacuation area and a second evacuation area where the subject is not present respectively on a side of the first position of the support (10) and a side of the second position of the support (10).

9. The measurement apparatus (1) according to claim 8, wherein the first evacuation area is an area of origin of the sensor heads (20) when the electric unit (30) is in the first position and the second evacuation area is the area of origin of the sensor heads (20) when the electric unit (30) is in the second position.

10. The measurement apparatus (1) according to claim 8 or 9, further comprising a pair of switches (50) that are mounted on the support (10) respectively on the side of the first position of the support (10) and on the side of the second position of the support (10) and that switch a definition of an origin of the sensor heads (20) and functions of controlling travel of the sensor heads (20) according to an arrangement of the electric unit (30).

11. The measurement apparatus (1) according to claim 1, further comprising a cable (40) that connects the pair of sensor heads (20) and the electric unit (30) to each other and at least part of the cable is arranged outside the support (10).

12. The measurement apparatus (1) according to claim 1, wherein the support (10) is an O-shape frame including a pair of beams (11) that support the pair of sensor heads (20), respectively, a first stand (12a) that connects ends of the pair of beams (11) on the one side, and a second stand (12b) that connects ends of the pair of beams (11) on the other side.

13. The measurement apparatus (1) according to claim 12, wherein the first position is a position on the one side of the O-shape frame in a longitudinal direction, and
the second position is a position on the other side in the longitudinal direction.

14. The measurement apparatus (1) according to any one of claims 1 to 13, wherein the subject includes a battery electrode sheet.

15. The measurement apparatus (1) according to any one of claims 1 to 14, wherein the parameter includes a basis weight of the subject.
